# EUROPEAN PATENT SPECIFICATION

(11) **EP 1 810 049 B1**
(45) Date of publication and mention of the grant of the patent: **03.06.2015**
(21) Application number: 05797274.7
(22) Date of filing: 26.10.2005
(51) Int. Cl.: G01S 1/68, G01S 5/02, A61H 3/06

(54) **NAVIGATION SYSTEM FOR DISABLED PERSONS, IN PARTICULAR VISUALLY IMPAIRED PERSONS**
NAVIGATIONSSYSTEM FÜR BEHINDERTE, INSBESONDERE SEHBEHINDERTE
SYSTEME DE NAVIGATION POUR HANDICAPES, NOTAMMENT POUR MALVOYANTS

(30) Priority: 26.10.2004 LU 91115
(43) Date of publication of application: 25.07.2007
(73) Proprietor: The European Union, represented by the European Commission, 1049 Brussels (BE)
(72) Inventor: SIRONI, Marco, I-21014 Laveno-Mombello (IT); POUCET, André, I-21033 Cittiglio (IT); AZZALIN, Graziano, I-28047 Oleggio (IT)
(74) Representative: Office Freylinger
(86) International application number: PCT/EP2005/055569
(87) International publication number: WO 2006/045819

(56) References cited:
- EP-A- 1 313 079
- WO-A-98/41084
- WO-A-2004/044330
- FR-A- 2 756 957
- JP-A- 2001 349 744
- JP-A- 2004 309 305
- US-A- 4 827 395
- US-A1- 2002 056 669
- US-A1- 2004 068 368
- US-A1- 2004 095 242
- US-A1- 2004 155 815

## Description

### Introduction

The present invention relates to a navigation system for disabled persons, in particular visually impaired persons. The present invention also relates to a method for providing a navigation system infrastructure and to a transponder for a navigation system.

Pedestrian mobility for disabled persons, in particular visually impaired and unsighted persons, in an outdoor environment is often difficult and dangerous. This applies especially to the environment of a large city. Different approaches have been found to help an affected person. The visually impaired commonly rely on a white stick and/or a guide dog to assist them in efficiently reaching a desired destination without harm. However, this approach is successful only if the majority of the path to the destination is already known to the affected person (or the guide dog).

Accordingly, various solutions have been proposed to increase the mobility and/or safety of disabled pedestrians. EP 0 338 997 for example discloses an information broadcast system comprising at least one transmitting station associated with a zone of interest and a portable receiving station actuated by the user to poll said transmitting station and adapted in order to deliver intelligible information on said zone of interest. In this way, an unsighted person can be informed on the status of a traffic light signal for example. While increasing safety, this approach is of little assistance in navigation.

A widespread approach for outdoor navigation relies on the Global Positioning System (GPS) based on orbital satellite signals. For civil purposes however, the precision of GPS applications is limited and considerable position determination delays may occur with GPS receivers. Accordingly, due to the lack of precision and real time ability, sufficient safety for a disabled pedestrian cannot be warranted by such a system. Another solution has been proposed in US 5,144,294. This solution is based on a portable device having a radio transceiver and fixed base radio transceivers disposed at reference locations. Upon a command by the user, said portable device receives from said base transceiver a location indicating message signal to be vocalized. To support navigation the portable transceiver is provided with an electronic compass. Another approach has been described in US 5,806,017. This solution uses a portable navigation unit and a plurality of location beacons. The described location beacons comprise infrared emitting diodes. A direct line of sight is therefore required between the navigation unit and the beacons. Another solution is proposed in US 6,259,990. This solution uses a portable guidance apparatus and a plurality of markers which output a beam carrying location information and direction information of this beam.

A common disadvantage of the aforementioned solutions is the complexity of the devices employed for marking a location. Moreover, these devices being active transponders, they require a power supply. As a result, such devices are expensive in acquisition and operation. Another disadvantage is the susceptibility to damage of such devices, e.g. by environmental influences or vandalism.

EP 1 313 079 discloses a navigation system for the general public using RFID tags. The RFID tags are used as location markers e.g. in a shopping mall. A receiver is described which is capable of providing navigation instructions in accordance with a predetermined code read from such a RFID tag. The disclosed system does not require a power supply for each location marker, it is however not easily adapted for an outdoor use.

### Object of the invention

The object of the present invention is to provide a navigation system for disabled persons, in particular visually impaired persons, which overcomes the above disadvantages. Another object of the invention is to propose a method for providing a navigation system infrastructure. Yet another object of the invention is to provide a transponder for a navigation system.

### General description of the invention

In order to achieve the above object, the present invention as defined by the claims proposes a navigation system for disabled persons, in particular visually impaired persons. According to the invention, this navigation system comprises a plurality of transponders with RFID tags, said transponders being installed at known locations and each of said RFID tags having a unique identifier and a database comprising a mapping of the unique identifiers to the known locations. This system also comprises a portable device having a transceiver for communication with at least one proximate transponder, a storage means for storing content of the database, a processing means for determining information in accordance with the database and the unique identifier of the proximate transponder and an interface for providing the information to the disabled persons. According to an important aspect of the invention, the transponders are embedded in footpaths and/or border surfaces of footpaths. Thereby the transponders are intrinsically protected against damage e.g. by environmental influences or vandalism. Additionally, the transponders are directly provided along the path, which reduces the requirements on the transceiver range.

In a preferred embodiment, the transponders further comprise a protection capsule safely enclosing the RFID tag so that they can be directly embedded in the footpaths and/or the border surfaces of footpaths.

Due to the protection capsule, the transponders can be directly inserted in a bore in a footpath or a border surface of a footpath, for example in an urban outdoor environment. The transponder may also be encased directly into concrete, e.g. during construction. In yet another variant the transponder may be embedded into a surface covering during construction of the latter for example. While increasing protection against damage, the protection capsule also facilitates installation of the transponders and thus the navigation system in general.

Advantageously, the protection capsule is a ceramic, synthetic or metallic protection capsule.

In a preferred embodiment, the transponders comprise passive RFID tags, preferably passive animal identification RFID tags. Such animal identification RFID tags can be easily recovered after use, thus reducing the cost of the transponder itself and possibly the additional cost for encapsulation. Furthermore, the cost for disposing of used animal identification RFID tags is avoided.

The transponders being directly embedded into the soil of a footpath such as a sidewalk or in close vicinity thereof, the antenna of the transceiver can be mounted in a white stick of a visually impaired person or in a wheelchair of a disabled person. Thereby, proximity between the RFID reader and the RFID tag is inherently warranted.

The aforementioned database preferably comprises additional information related to the environment of the known locations.

Advantageously, the navigation system further comprises active transponders at certain critical locations for delivering time dependant information related to the critical locations. Such active transponders can be used for example to identify traffic lights and inform about the current status thereof.

The present invention also proposes a method for providing a navigation system infrastructure comprising the steps of recovering an animal identification RFID tag, installing the RFID tag as a transponder at a predetermined location, associating a unique identifier of the RFID tag with the predetermined location and storing the thus obtained association in a database.

The above step of installing the recovered animal identification RFID tag as transponder preferably comprises directly embedding the animal identification RFID tag in a footpath and/or a border surface of a footpath.

As seen above, the present invention proposes the use of animal identification RFID tags as transponders in a navigation system for disabled persons, in particular visually impaired persons. Preferably, the animal identification RFID tags have been recovered after prior use in an animal.

Finally, the present invention proposes a transponder for a navigation system. According to an important aspect, this transponder comprises an animal identification RFID tag.

### Detailed description with respect to the figures

The present invention will be more apparent from the following description of a not limiting embodiment with reference to the attached drawings, wherein
- Fig.1:: is a longitudinal cross sectional view of a capsule for electronic identification of an animal;
- Fig.2:: is a cross sectional view of a capsule according to Fig.1 embedded into the soil for use as a transponder;
- Fig.3:: is a block diagram of a preferred embodiment of a portable navigation device;
- Fig.4:: is a block diagram of the device of Fig.3 connected to a remote database;
- Fig.5:: is a schematic view in part of a navigation system infrastructure using transponders according to Fig.2.

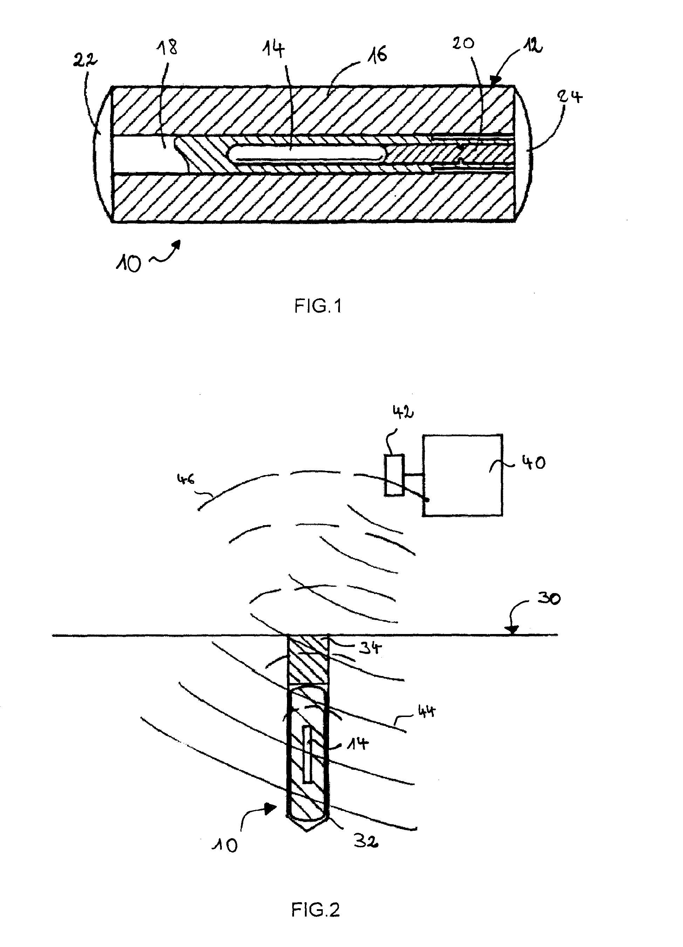

Fig.1 shows a transponder globally identified by reference numeral 10. The transponder 10 comprises a protection capsule 12 and a radio frequency identification (RFID) tag or transponder 14 safely encapsulated in the capsule 12. The protection capsule 12 is originally designed for use in animal identification. More specifically, in this embodiment the protection capsule 12 has the form of a bolus as described in EP 0 849 989 for use with ruminants such as bovids. Since RFID tags are available at low cost, the packaging of the latter has become a significant cost factor. The reuse of such animal identification tags significantly reduces prime cost of encapsulated transponders.

As seen in Fig.1, the RFID tag 14 is packaged as an essentially cylindrical rod, e.g. made of glass. The package of the RFID tag 14 in turn is fully encapsulated and safely enclosed by the outer protection capsule 12 which comprises a cylindrical body 16 made of alumina (Al₂O₃) and/or silica (SiO₂) and possibly one or more additional constituents (e.g. MgO, CaO, BaO, Na₂O, K₂O, Fe₂O₃, TiO₂). The protection capsule 12 also comprises a two piece self blocking rivet consisting of a first rivet element 18 and a second rivet element 20. The first rivet element 18 has a elongated cavity adapted to receive the RFID tag 14 while the second rivet element 20 is adapted to be engagingly and partially received in this cavity so as to sealingly close the latter. This engagement provides self blocking of the rivet elements 18 and 20 so as to put their respective head portions 22, 24 into sealing engagement with the end faces of the cylindrical body 16. The rivet elements 18 and 20 together with the cylindrical body 16 insure hermetical enclosure of the RFID tag 14. The cylindrical body 16 confers to the protection capsule 12 properties such as a very low porosity, high specific weight, high dielectric rigidity, high thermal resistance and high mechanical resistance. As a result, the protection capsule 12, although originally designed for use in animal identification, is well suited for use in an outdoor environment.

The RFID tag or transponder 14 consists of a passive emitter-receiver of conventional type for use in animal tracking (e.g. according to standards ISO 11784, ISO 11785). The passive RFID tag 14 does not require a power supply as it retrieves power for response transmission from the electro-magnetic field delivered by a corresponding RFID reader during interrogation. In a manner known per se, the RFID tag 14 comprises a permanent memory (not shown) storing a unique identifier specific to the tag and an antenna (not shown) for receiving and responding to radio-frequency queries from a RFID reader. The operational lifetime of such a tag is virtually unlimited and thus exceeds the lifetime of an animal carrying it. Therefore, after death of the animal, the RFID tag 14 can be recovered for future use. Moreover, such RFID tags 14 are easily reusable since they are free of maintenance and wear. The recovery can for instance be effected automatically during a slaughter process. Recommended steps before reusing recovered read-only tags are cleaning and functional testing. Where write-once-read-many (WORM) RFID tags or read/write RFID tags are used, additional reprogramming of the tags may be desirable.

Fig.2 shows a transponder 10 embedded in the soil 30. More specifically, the transponder 10 is installed in a bore 32 which is plugged afterwards with a suitable filling material 34. The soil 30 represents for example a sidewalk pavement or any other footpath surface covering. Such an environment requires a mechanically robust, chemically and temperature tolerant packaging. The transponder 10 of Fig.1 provides a fully encapsulated RFID tag 14 with such a packaging at virtually no additional expense, particularly when recovered from prior use in animal identification. While shown in a bore, the transponder 10 could be directly embedded into concrete or asphalt in an outdoor environment. Alternatively, the transponder 10 can be embedded in a border surface of a footpath such as a kerbstone or an adjacent wall. An indoor use is however not excluded. Fig.2 shows an electrically coupled transponder 10 when queried by a transceiver. The transceiver is a RFID reader module 40 having an antenna 42. The RFID reader module 40 provides through its antenna 42 an electromagnetic field 44 (RF waves) initially powering the passive RFID tag 14. Subsequently, the RFID reader module 40 transmits data forming a query for the identifier of the RFID tag 14. In response, the RFID tag 14 powered by the electromagnetic field 44, emits RF waves 46 containing its specific identifier back to the RFID reader module 40. It will be appreciated that this kind of transponder 10 does not require a power supply. Moreover, no line of sight is required for querying the RFID tag 14. Preferably, the protection capsule 12 of the transponder 10 is oriented in the bore 32 for maximum reading range of the RFID tag 14 with respect to the antenna 42, i.e. so as to achieve maximum coupling. Well embedded, the RFID tag 14 is not subject to wear and almost indestructible. In case of a read only tag, the latter is intrinsically protected against tampering since its identifier is unalterable. Since the size of such encapsulated transponders 10 is comparatively small, there will be little noticeable influence on the environment into which they are embedded. It will be appreciated from Fig.2 that the protection capsule 12 significantly facilitates installation of the transponders 10. A transponder 10 can be inserted and cemented directly into a drilled hole, directly encased into concrete during construction or directly inserted into surface coverings during construction for example. Due to the protection capsule 12, damage to the RFID tag 14 can hardly occur during or after installation.

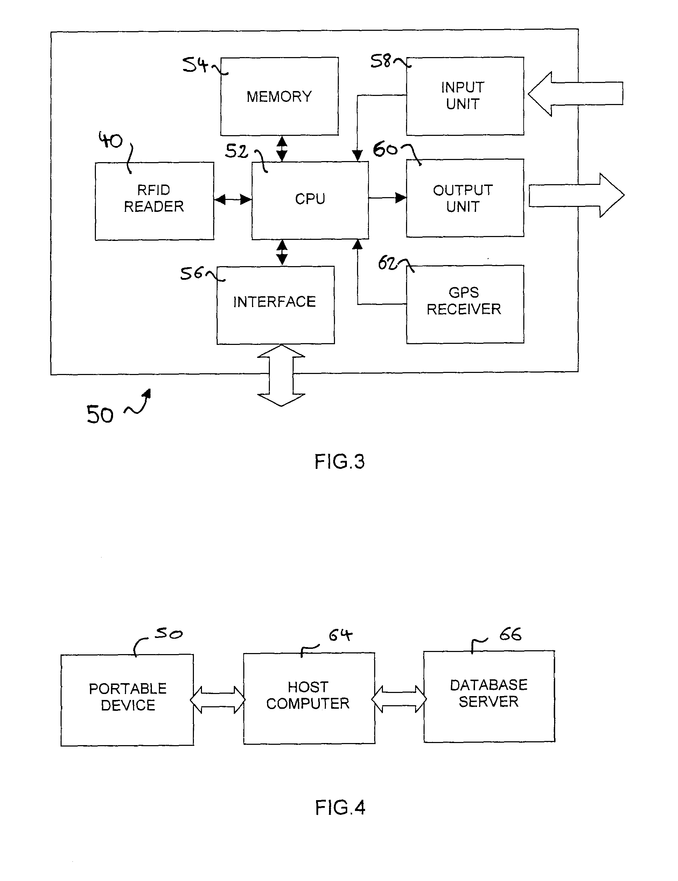

Fig.3 shows a block diagram of a portable device 50. The portable device 50 has a transceiver, more precisely a RFID reader module 40 for reading identifiers of RFID tags as described above. The RFID module 40 is connected to a central processing unit (CPU) 52. A memory 54 for storing content (in particular data associated to RFID tag identifiers) is connected to the CPU 52. An electronic interface 56 is provided to allow communication of the portable device with other devices such as a host computer or a mobile phone. The interface 56 is of any suitable standard type (e.g. serial I/O cable interface, a wireless GPRS interface, etc.). In particular, the interface 56 allows to update the content stored in the memory 54. A man-machine-interface (MMI) input unit 58 allows to operate the portable device 50. The input unit 58 consists of any interface suitable for a particular type of disabled person, e.g. a voice recognition or a keyboard suitable for visually impaired persons. A MMI output unit 60 allows to deliver intelligible information to a user. As for the input unit 58, the output unit 60 is adapted for a specific type of disabled person and can be for example an audio module producing synthesized speech. The information primarily consists of location and navigation information and other information related to the environment of a specific location. The location information is obtained by linking an RFID identifier read from a proximate transponder 10 by means of the RFID reader 40 with the corresponding content in the memory 54. The content of the memory 54 in combination with a known actual location obtained from a transponder 10 allows the CPU 52 to produce navigation information. In the preferred embodiment, a GPS receiver 62 is integrated into the portable device 50 and coupled to the CPU 52. The GPS receiver 62 allows to improve navigation capability of the portable device 50 for example in areas with insufficient or no transponder coverage.

Fig.4 shows a block diagram of the portable device 50 of Fig.3 connected to a database server 66 by means of a host computer 64. This connection can be effected for example via Internet. Since the identifier of the RFID tag 14 contained in the transponder 10 is static and does by itself not provide location information, a database links the identifier with corresponding location information. The database, whose content may be variable, is provided by the database server 66. Besides correlating actual location information such as coordinates to the identifiers, the database server 66 may provide additional information for a given transponder 10. The database server 66 may for example provide information related to the surrounding environment such as opening times of a store or a service provider located in proximity of a given transponder 10. Accordingly, the database defines a virtual map of a certain area and is capable of providing additional information. The transponders 10, more precisely the identifiers of their RFID tags 14, provide the references to this virtual map. The user can store desired portions of this virtual map provided by the database server 66 in the memory 54 of their portable device 50. It will be appreciated that the database can be updated as required, without the need of changes to the existing physical infrastructure and in particular the installed transponders 10. Described above is an off-line connection of the portable device 50 to the database server 66. As an alternative, the portable device 50 can be connected to the database on-line i.e. when being used, e.g. through a wireless LAN or mobile phone link.

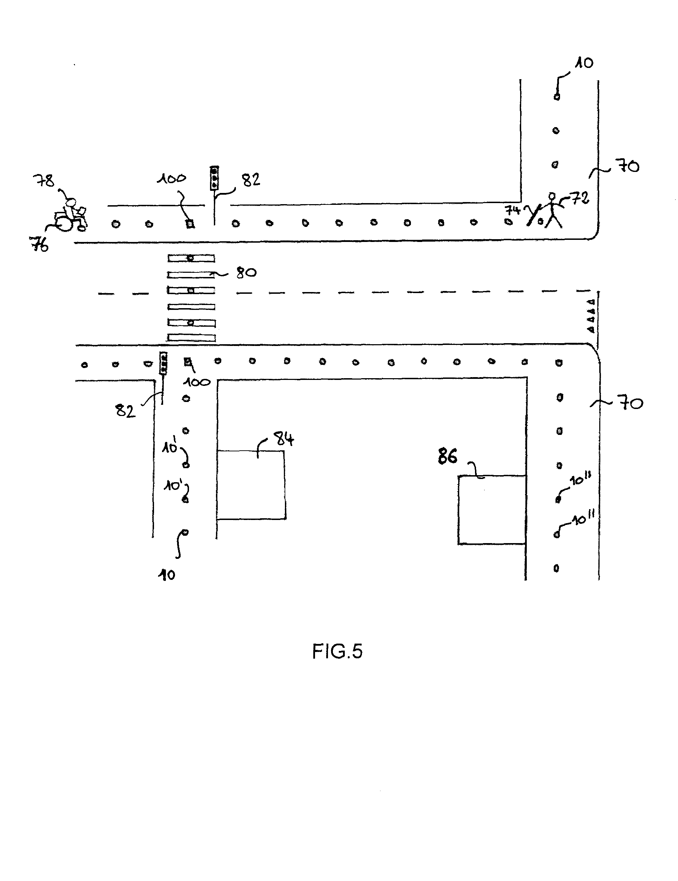

Fig.5 partially shows a navigation system infrastructure in an urban outdoor environment. A multitude of transponders 10, 10', 10" is embedded into side-walks 70 (see Fig.2), or other suitable places. The transponders 10, 10', 10" provide secure paths to guide disabled persons to whatever destination that is part of the infrastructure. The intrinsic characteristics of the RFID tags 14 contained in the transponders 10 allows to univocally determine the correct path from a given starting location to a desired destination location. The portable device 50 according to Fig.3 can be carried for example by an unsighted person 72 having a white stick 74. In this case, the antenna 42 for the RFID reader module 40 is preferably integrated into the white stick so as to be close to the soil. The antenna 42 is then connected to the portable device 50 carried by the unsighted person 72. Alternatively, the portable device 50 and the antenna 42 may be provided on a wheelchair 76 of a disabled person 78. The portable devices 50 allow the disabled persons 72, 78 to find and follow the secure path to their destination. As described above, the portable devices 50 interrogate the transponders 10, 10', 10" and receive a signal back carrying the informing of the respective identifier at a given location. With suitable means implemented, the position of a transponder 10 relative to the portable device can be determined with high accuracy. Such means are described for example in US 5,594,448. Knowing the identifier of the one or more closest transponders 10, 10', 10" and the relative position thereto, the portable devices 50 can accurately determine their own position by correlating the identifier(s) with the stored database content. Navigation information is derived from the previously defined destination and the current position in a manner known per se. The portable devices 50 then provide intelligible information through MMI outputs to their users in accordance with the identified location, the environment and the path to the desired destination.

Active transponders 100 are provided at crosswalks 80. Wherever applicable, the active transponders 100, besides warning of the presence of a crosswalk 80 provide information on the current status of the traffic lights 82 at this crosswalk. This allows the disabled persons 72, 78 to safely pass the crosswalk 80.

As an illustrative example, the navigation system comprising the infrastructure of transponders 10, 10', 10" and a portable device 50 may guide the disabled person 72 or 78 to a chemist's store 84. The chemist's store 84 is located through the position of the transponders 10'. As another example, specific transponders 10" in the vicinity of a particular service provider 86 may have related database entries which provide additional information regarding the service provider 86 or specifics thereof. This additional information can be provided to a passing user 72, 78 either on request or spontaneously if desired. With an on-line connection of the portable device 50 to the database server 66, this information can be real time information.

Besides providing navigation information, the portable device 50 may also keep track of the current location or position of its user 72, 78. This information can be used to help emergency services to find the disabled person 72 or 78 for example if the concerned person has issued an emergency call due to an accident. To this effect, a specific emergency call function can be provided in the portable device 50.

The transponders 50 are preferably disposed in an area in such a way that there is constantly at least one transponder within the range of the RFID reader 40, i.e. the mesh size of a grid defined by the transponders 10, 10', 10" is adapted to the range of the RFID readers 40. Generally, this range is in the order of one to several meters. Due to this range, sufficient accuracy of the system is warranted by a sufficient number of transponders 10. As a large number of transponders 10 is accordingly required, the benefit of reusing animal identification RFID tags 14 as shown in Fig.1 becomes apparent. As is well known, RFID tags 14 are particularly suitable for applications with many tags and comparatively few readers.

In conclusion, the present invention provides a reliable integrated system increasing personal independence, mobility and personal safety of disabled persons and in particular visually impaired persons. Moreover, a widespread use is favoured since this system can be implemented at moderate cost.

## Claims

1. A navigation system for disabled persons, in particular visually impaired persons, comprising:
a plurality of transponders (10, 10', 10"; 100) with RFID tags (14), said transponders (10, 10', 10"; 100) being installed at known locations and each of said RFID tags (14) having a unique identifier;
a database (66) comprising a mapping of said unique identifiers to said known locations; and
a portable device (50) having a transceiver (40) for communication with at least one proximate transponder (10, 10', 10"; 100), a storage means (54) for storing content of said database, a processing means (52) for determining information in accordance with said database (66) and said unique identifier of said proximate transponder (10, 10', 10"; 100) and an interface (56) for providing said information;
**characterized in that**
said transponders (10, 10', 10"; 100) comprise animal identification RFID tags (14) that are safely enclosed in a protection capsule (12) in the form of a bolus and have been recovered after prior use in an animal.

2. The navigation system of claim 1, wherein said animal identification RFID tags (14) are embedded in footpaths (30, 70) and/or border surfaces of footpaths.

3. The navigation system of claim 2, wherein at least one of said transponders (10, 10', 10"; 100) is inserted in a bore (32) in a footpath (30, 70) or a border surface of a footpath.

4. The navigation system of claim 2, wherein at least one of said transponders (10, 10', 10"; 100) is encased into concrete

5. The navigation system of claim 2, wherein at least one of said transponders (10, 10', 10"; 100) is embedded into a surface covering during construction.

6. The navigation system according to any of claims 1 to 5, wherein said protection capsule (12) is a ceramic, synthetic or metallic protection capsule.

7. The navigation system according to any of claims 1 to 6, wherein said transponders (10, 10', 10") comprise passive animal identification RFID tags (14).

8. The navigation system according to any of claims 1 to 7, wherein said transceiver (40) includes an antenna (42) mounted in a white stick of a visually impaired person.

9. The navigation system according to any of claims 1 to 7, wherein said transceiver (40) includes an antenna (42) mounted in a wheelchair of a disabled person.

10. The navigation system according to any of claims 1 to 9, wherein said database (66) comprises information related to the environment of said known locations.

11. A navigation system according to any of claims 1 to 10, further comprising active transponders (100) at certain critical locations for delivering time dependant information related to said critical locations.

12. Method for providing a navigation system infrastructure comprising the steps of
recovering an animal identification RFID tag (14) after prior use in an animal;
installing said RFID tag (14) as a transponder (10, 10', 10") at a predetermined location;
associating a unique identifier of said RFID tag (14) with said predetermined location;
storing said association in a database (66).

13. Method according to claim 12, wherein said step of installing said animal identification RFID tag (14) as transponder (10, 10', 10") comprises directly embedding said animal identification RFID tag (14) in a footpath (30, 70) and/or a border surface of a footpath.

14. Use of animal identification RFID tags (14) that have been recovered after prior use in an animal as transponders (10, 10', 10") installed at known locations in a navigation system for disabled persons, in particular visually impaired persons, wherein each of said animal identification RFID tags (14) has a unique identifier and said navigation system includes a database (66) comprising a mapping of said unique identifiers to said known locations.

## Patentansprüche

1. Navigationssystem für Behinderte, insbesondere Sehbehinderte, umfassend
mehrere Transponder (10, 10', 10"; 100) mit RFID-Tags (14), wobei die Transponder (10, 10', 10"; 100) an bekannten Stellen installiert werden und jedes der RFID-Tags (14) einen eindeutigen Identifikator hat;
eine Datenbank (66), die eine Abbildung der eindeutigen Identifikatoren zu den bekannten Stellen umfasst;
eine tragbare Vorrichtung (50) mit einem Sendeempfänger (40) zur Kommunikation mit wenigstens einem nahegelegenen Transponder (10, 10', 10"; 100), eine Speichereinrichtung (54) zum Speichern von Inhalt der Datenbank, eine Verarbeitungseinrichtung (52) zum Bestimmen von Informationen gemäß der Datenbank (66) und dem eindeutigen Identifikator des nahegelegenen Transponders (10, 10', 10"; 100) und eine Schnittstelle (56) zum Bereitstellen der Informationen;
**dadurch gekennzeichnet, dass**
die Transponder (10, 10', 10"; 100) RFID-Tags zur Tieridentifikation (14) umfassen, die sicher in einer Schutzkapsel (12) in Form eines Bolus eingeschlossen sind und nach vorheriger Verwendung in einem Tier wiedergewonnen wurden.

2. Navigationssystem nach Anspruch 1, wobei die RFID-Tags zur Tieridentifikation (14) in Fußwegen (30, 70) und/oder Randflächen von Fußwegen eingebettet sind.

3. Navigationssystem nach Anspruch 2, wobei wenigstens einer der Transponder (10, 10', 10"; 100) in eine Bohrung (32) in einem Fußweg (30, 70) oder einer Randfläche eines Fußwegs eingefügt ist.

4. Navigationssystem nach Anspruch 2, wobei wenigstens einer der Transponder (10, 10', 10"; 100) einbetoniert ist.

5. Navigationssystem nach Anspruch 2, wobei wenigstens einer der Transponder (10, 10', 10"; 100) während des Baus in eine Deckschicht eingebettet wird.

6. Navigationssystem nach einem der Ansprüche 1 bis 5, wobei die Schutzkapsel (12) eine keramische, synthetische oder metallische Schutzkapsel ist.

7. Navigationssystem nach einem der Ansprüche 1 bis 6, wobei die Transponder (10, 10', 10") passive RFID-Tags zur Tieridentifikation (14) umfassen.

8. Navigationssystem nach einem der Ansprüche 1 bis 7, wobei der Sendeempfänger (40) eine Antenne (42) umfasst, die in einem Weißen Stock einer sehbehinderten Person befestigt ist.

9. Navigationssystem nach einem der Ansprüche 1 bis 7, wobei der Sendeempfänger (40) eine Antenne (42) umfasst, die in einem Rollstuhl einer behinderten Person befestigt ist.

10. Navigationssystem nach einem der Ansprüche 1 bis 9, wobei die Datenbank (66) die Umgebung der bekannten Stellen betreffende Informationen umfasst.

11. Navigationssystem nach einem der Ansprüche 1 bis 10, ferner umfassend aktive Transponder (100) an bestimmten kritischen Stellen zur Versorgung mit zeitabhängigen Informationen betreffend die kritischen Stellen.

12. Verfahren zum Bereitstellen einer Navigationssystem-Infrastruktur, umfassend die Schritte der Wiedergewinnung eines RFID-Tags zur Tieridentifikation (14) nach vorheriger Verwendung in einem Tier;
des Installierens des RFID-Tags (14) als Transponder (10, 10', 10") an einer vorbestimmten Stelle;
des Zuweisens eines eindeutigen Identifikators des RFID-Tags (14) zu der vorbestimmten Stelle;
des Speicherns der Zuweisung in einer Datenbank (66).

13. Verfahren nach Anspruch 12, wobei der Schritt des Installierens des RFID-Tags zur Tieridentifikation (14) als Transponder (10, 10', 10") das direkte Einbetten des RFID-Tags zur Tieridentifikation (14) in einen Fußweg (30, 70) und/oder eine Randfläche eines Fußweges umfasst.

14. Verwendung von RFID-Tags zur Tieridentifikation (14), die nach vorheriger Verwendung in einem Tier als Transponder (10, 10', 10") wiedergewonnen wurden, und die an bekannten Stellen in einem Navigationssystem für Behinderte, insbesondere Sehbehinderte, installiert wurden, wobei jedes der RFID-Tags zur Tieridentifikation (14) einen eindeutigen Identifikator aufweist und das Navigationssystem eine Datenbank (66) umfasst, die eine Abbildung der eindeutigen Identifikatoren zu den bekannten Stellen umfasst.

## Revendications

1. Système de navigation pour personnes handicapées, notamment des personnes malvoyantes, comprenant :
une pluralité de transpondeurs (10, 10', 10" ; 100) avec des étiquettes RFID (14), lesdits transpondeurs (10, 10', 10" ; 100) étant installés à des endroits connus et chacune desdites étiquettes RFID (14) ayant un identifiant unique ;
une base de données (66) comprenant une cartographie desdits identifiants uniques par rapport auxdits endroits connus ; et
un dispositif portatif (50) pourvu d'un émetteur-récepteur (40) pour communiquer avec au moins un transpondeur (10, 10', 10" ; 100) proche, d'un moyen de stockage (54) pour stocker du contenu de ladite base de données, d'un moyen de traitement (52) pour déterminer des informations en accord avec ladite base de données (66) et ledit identifiant unique dudit transpondeur (10, 10', 10" ; 100) proche, et d'une interface (56) pour fournir lesdites informations ;
**caractérisé en ce que**
lesdits transpondeurs (10, 10', 10" ; 100) comprennent des étiquettes RFID (14) d'identification d'un animal qui sont enfermées d'une façon sûre dans une capsule de protection (12) sous forme de bolus et ont été récupérées après avoir été utilisées d'abord dans un animal.

2. Système de navigation selon la revendication 1, lesdites étiquettes RFID (14) d'identification d'un animal étant encastrées dans des voies piétonnes (30, 70) et/ou les surfaces limitant des voies piétonnes.

3. Système de navigation selon la revendication 2, au moins un desdits transpondeurs (10, 10', 10" ; 100) étant inséré dans un forage (32) dans une voie piétonne (30, 70) ou une surface limitant une voie piétonne.

4. Système de navigation selon la revendication 2, au moins un desdits transpondeurs (10, 10', 10" ; 100) étant noyé dans du béton.

5. Système de navigation selon la revendication 2, au moins un desdits transpondeurs (10, 10', 10" ; 100) étant encastré dans un revêtement de surface pendant la construction.

6. Système de navigation selon l'une quelconque des revendications 1 à 5, ladite capsule de protection (12) étant une capsule de protection céramique, synthétique ou métallique.

7. Système de navigation selon l'une quelconque des revendications 1 à 6, lesdits transpondeurs (10, 10', 10") comprenant des étiquettes RFID (14) d'identification d'un animal passives.

8. Système de navigation selon l'une quelconque des revendications 1 à 7, ledit émetteur-récepteur (40) incluant une antenne (42) montée dans une canne blanche d'une personne malvoyante.

9. Système de navigation selon l'une quelconque des revendications 1 à 7, ledit émetteur-récepteur (40) incluant une antenne (42) montée dans un fauteuil roulant d'une personne handicapée.

10. Système de navigation selon l'une quelconque des revendications 1 à 9, ladite base de données (66) comprenant des informations relatives à l'environnement desdits endroits connus.

11. Système de navigation selon l'une quelconque des revendications 1 à 10, comprenant, en outre, des transpondeurs actifs (100) à certains endroits critiques pour fournir des informations dépendantes du temps relatives audits endroits critiques.

12. Procédé pour fournir une infrastructure de système de navigation, comprenant les étapes de :
récupération d'une étiquette RFID (14) d'identification d'un animal après utilisation préalable dans un animal ;
installation de ladite étiquette RFID (14) en tant que transpondeur (10, 10', 10") en un endroit prédéterminé ;
association d'un identifiant unique de ladite étiquette RFID (14) audit endroit prédéterminé ;
stockage de ladite association dans une base de données (66).

13. Procédé selon la revendication 12, ladite étape d'installation de ladite étiquette RFID (14) d'identification d'un animal en tant que transpondeur (10, 10', 10") comprenant l'encastrement direct de ladite étiquette RFID (14) d'identification d'un animal dans une voie piétonne (30, 70) et/ou une surface limitant une voie piétonne.

14. Utilisation d'étiquettes RFID (14) d'identification d'un animal, ayant été récupérées après avoir été utilisées d'abord dans un animal en tant que transpondeurs (10, 10', 10"), installées à des endroits connus dans un système de navigation pour personnes handicapées, notamment des personnes malvoyantes, chacune desdites étiquettes RFID (14) d'identification d'un animal ayant un identifiant unique et ledit système de navigation incluant une base de données (66) comprenant une cartographie desdits identifiants uniques par rapport auxdits endroits connus.
